# EUROPEAN PATENT SPECIFICATION

(11) **EP 2 236 357 B1**
(45) Date of publication and mention of the grant of the patent: **05.03.2014**
(21) Application number: 09156958.2
(22) Date of filing: 31.03.2009
(51) Int. Cl.: B60R 9/10, B60R 9/06

(54) **Rear carrier for non-towing vehicles**
Hinterer Träger für Fahrzeuge ohne Zug
Main de ressort arrière pour véhicules non remorqueurs

(43) Date of publication of application: 06.10.2010
(73) Proprietor: Scambia Industrial Developments AG, 9494 Schaan (LI)
(72) Inventor: Jaspers Marc, 4907 KH Oosterhout (NL)
(74) Representative: Hoeger, Stellrecht & Partner Patentanwälte

(56) References cited:
- DE-A1- 4 403 715
- DE-A1-102004 035 721
- DE-B3-102005 033 082
- DE-U1- 9 311 905
- FR-A- 2 867 120

## Description

The invention relates to a rear carrier for non-towing vehicles, in particular to a rear carrier for bicycles or the like, as it is specified in the independent claim.

Several well-working carrier systems are known for cars being equipped with a towball, and such carrier systems usually are attached and detached from the towball with the aid of a gear rack via a separate interface. For a number of vehicles, particularly for some smaller, or sub-compact or hybrid cars, however, towing is not allowed. On the other hand, nowadays more and more people choose such smaller cars due to a number of considerations. Many of them do not consider this aspect during making their buy decision for a specific car and then discover that these cars cannot be equipped with tow bars which is in many cases the platform for rear mounted carriers for bicycles. However, taking their bicycles along with them is more and more a must to pursue an active lifestyle these days.

Recently carriers have become known which can be installed on non-towing cars, these systems comprising a frame which can be mounted to the chassis of the car and a receiver which can be locked and unlocked, respectively. In order to attach the rack for carrying the bicycles to the receiver, the user must get down on his/her knees to lock the receiver which is located under the rear end of the car, to then mount the rack to the said receiver. This installation is burdensome and inconvenient for the user.
Such a carrier can be seen in FR-A-2 867 120

Therefore, it is an object of the invention to suggest a carrier for bicycles or the like (e.g. E-bikes or motorbikes) for non-towing vehicles, which can be easily and conveniently installed on the non-towing vehicle.

The present invention as it is defined by the features of the independent claim suggests a carrier for bicycles or the like for non-towing vehicles which overcomes the aforementioned disadvantages. Advantageous further embodiments are the subject of the dependent claims.

In particular, the rear carrier for non-towing vehicles, in particular for carrying bicycles or the like, according to the invention comprises:
- a base frame to be mounted to the chassis of the vehicle, the base frame being provided with a receiver
- a detachable interface which is capable of being detachably mounted to the receiver of the base frame, and
- a rack to be fixedly mounted to the detachable interface for carrying the bicycles or the like.
   The detachable interface comprises engagement means for engaging the receiver of the base frame, and the said engagement means are movable between an engagement position in which they lockingly engage the receiver to fixedly attach the detachable interface to the receiver, and a disengagement position in which they allow detachment or attachment of the detachable interface to the receiver. In addition, the detachable interface further comprises actuation means for moving the engagement means from the engagement position to the disengagement position, said actuation means being arranged spaced apart from the engagement means and being mechanically coupled to the engagement means such that for detachment of the detachable interface from or for attachment of the detachable interface to the receiver a user can actuate the actuation means from a position behind the vehicle, e.g. the car. While the base frame comprising the receiver is mounted to the chassis of the vehicle only once and then remains permanently attached to the chassis of the vehicle, and while further the rack is usually fixedly mounted to the detachable interface only once and then remains fixedly mounted thereto, the pre-mounted detachable interface and rack are usually attached and detached from the receiver of the base frame frequently. Therefore, attachment and detachment of the pre-mounted detachable interface and rack must be possible for the user in a convenient manner. The carrier according to the invention achieves this since the actuation means of the detachable interface are arranged spaced apart from the engagement means and are mechanically coupled to the engagement means such that for detachment of the detachable interface from or for attachment of the detachable interface to the receiver the user can actuate the actuation means from a position behind the car. After actuation of the actuation means, the engagement means of the detachable interface are in the disengagement position which allows attachment to or detachment from the receiver of the base frame. As the detachable interface is attached to the receiver, the engagement means lockingly engage the receiver and the carrier is then ready for use. These operations can be conveniently performed by the user without the need for him/her to get down on his/her knees but can be simply performed from a position behind the car. Detachment is performed in a similar manner: The user actuates the actuation means and then the pre-mounted detachable interface and rack can be conveniently detached from the receiver. While the carrier according to the invention may be particularly suitable for carrying bicycles or the like, it may also be suitable for carrying rear boxes or other desirable accessories.

In one embodiment of the rear carrier according to the invention the detachable interface comprises an essentially horizontally arranged attachment portion to engage the receiver, and a vertically arranged mounting portion to which the rack is to be mounted. The actuation means comprise an actuation member arranged at the upper end of the vertically arranged mounting portion of the detachable interface. Accordingly, the actuation means is arranged at the upper end of the vertically arranged mounting portion of the detachable interface to which the rack is fixedly mounted, and the essentially horizontally arranged attachment portion is to be inserted into the receiver of the base frame which is mounted to the chassis of the vehicle. This can be performed conveniently from behind the vehicle, e.g. the car: The user actuates the actuation member arranged at the upper end of the vertically arranged mounting portion, holds the pre-mounted rack and detachable interface while introducing the essentially horizontally arranged attachment portion into the receiver of the base frame until the engagement means of the detachable interface lockingly engage the receiver, whereupon the carrier is ready for use.

In a specific embodiment of the rear carrier according to the invention, the actuation member at the upper end of the mounting portion of the detachable interface comprises a pivotally arranged lever capable of being pivoted between a rest position and an actuated position. The engagement means for engaging the receiver of the base frame comprise a slidably arranged pinion, which is connected to the lever through a cable, e.g. a Bowden-cable, so as to allow the pinion to be slidably retracted from the engagement position to the disengagement position upon pivoting the lever from the rest position to the actuated position. This is a simple and reliable solution from a constructional point of view.

In a further specific embodiment of the rear carrier according to the invention the slidably arranged pinion is provided with locking means for locking the pinion in the disengagement position. This makes sure, that once the lever has been actuated to slidably retract the pinion from the engagement position to the disengagement position, the lever need not be held by the user so as to maintain the pinion in the disengagement position. The pinion remains locked in the disengagement position, so that the user is not required to hold the lever in the actuated position. As during installation of the carrier the essentially horizontally arranged attachment portion of the detachable interface has been introduced into the receiver, the pinion locked in the disengagment position must be released from that disengagement position so as move to the engagement position in which the attachment portion of the support member lockingly engages the receiver of the base frame.

For that reason, in accordance with a further specific embodiment of the rear carrier according to the invention release means are provided for releasing the pinion from the disengagement position upon introduction of the attachment portion of the support member into the receiver of the base frame. In addition, bias means (e.g. a spring) are provided to automatically return the released pinion to the engagement position so as to achieve an automatic engagement of the attachment portion of the support member upon introduction of the attachment portion into the receiver of the base frame. Accordingly, during attachment of the pre-mounted support member and carrier the attachment portion is introduced into the receiver whereupon the release means release the pinion locked in the disengagement position, and the bias means (e.g. the spring) then return the pinion to the engagement position whereupon the attachment portion of the detachable interface and with it the pre-mounted detachable interface and rack are lockingly mounted to the receiver. Detachment can be performed the other way round: The user actuates the lever of the detachable interface from the rest position to the actuation position thus retracting the pinion to the disengagement position in which the pinion gets locked, and then pulls the pre-mounted detachable interface and rack rearwards essentially horizontally so as to move the attachment portion of the support member out of the receiver of the base frame.

To avoid theft of the pre-mounted detachable interface and rack when attached to the receiver of the frame, a further embodiment of the rear carrier according to the invention comprises anti-theft means for blocking the pinion in its engagement position when the anti-theft means are locked. In this engagement position of the pinion it is impossible to detach the pre-mounted detachable interface and rack from the receiver, thus providing a simple and reliable anti-theft means.

In a further embodiment of the rear carrier according to the invention at least one of the base frame, the detachable interface and the rack are made from a light-weight material, e.g. aluminum. Such light-weight materials save weight and thus contribute to a low fuel consumption thus contributing to environmental protection.

Further advantageous aspects of the rear carrier according to the invention will become apparent from the following description of an embodiment of essential parts of the carrier with the aid of the drawings in which:
- Fig. 1: shows the essential components of an embodiment of the rear carrier according to the invention, namely the base frame, the detachable interface and the rack,
- Fig. 2: shows an embodiment of the receiver of the base frame of Fig. 1 in a perspective view,
- Fig. 3: shows a cross-sectional view of the receiver of Fig. 2,
- Fig. 4: shows the detachable interface of Fig. 1 with the pinion in the disengagement position, in which the detachable interface can be attached to or detached from the receiver,
- Fig. 5: shows the detachable interface of Fig. 4 with the pinion in the engagement position, and
- Fig. 6: shows the pinion of the detachable interface of Fig. 4 in a greatly enlarged view.

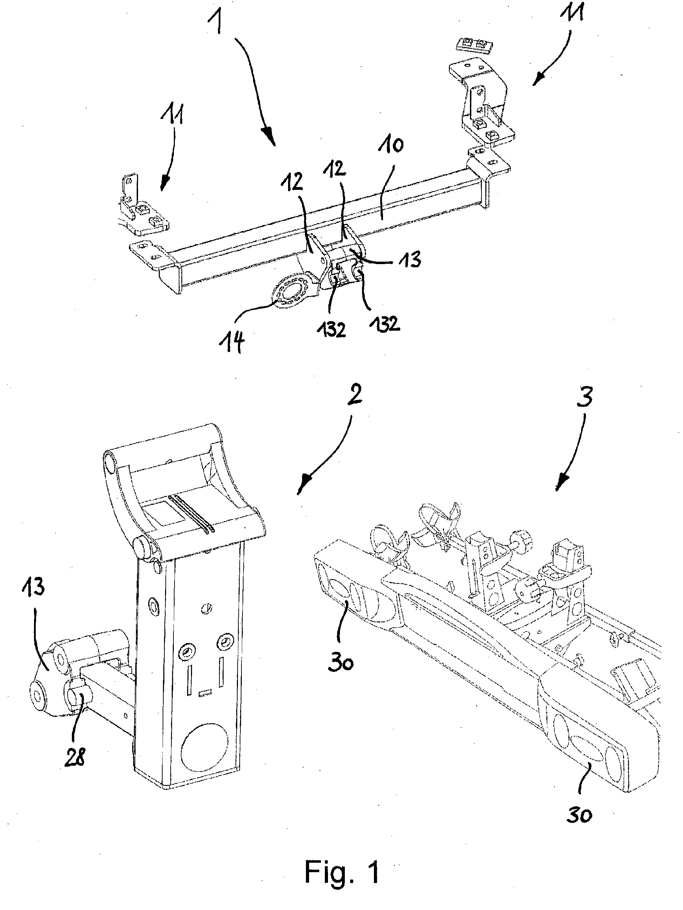

In Fig. 1 the three components of an embodiment of the rear carrier for bicycles or the like according to the invention are shown. These components are a base frame 1 to be mounted to the chassis of the vehicle, e.g. a car, a detachable interface 2 to be mounted to a receiver of the base frame 1 (which is car-dependent), and a rack 3 to be mounted to the detachable interface 2. While rack 3 may be particularly suitable for carrying bicycles or the like, it may also be suitable for carrying a rear box or other desirable accessories. The base frame 1 comprises a cross-beam 10 and mounting means 11 for mounting the cross-beam 10 to the chassis of the car. Two flanges 12 are fixedly attached to cross-beam 10, e.g. through welding or with the aid of bolts. This arrangement can be a standard equipment which is used for towing, e.g. the system known under the name AK4 of Belgian manufacturer BOSAL, except for the tow ball. Instead of the (not present) tow ball a receiver 13 is fixedly mounted to the flanges 12, e.g. with the aid of screws and nuts or in another suitable manner. An eyelet 14 projects laterally from one of the flanges 12 through which electrical supply cables can be guided and connected to rack 3 so as to provide a power/signal supply to the rear lights 30 of rack 3. It is to be noted that detachable interface 2 is shown in Fig. 1 together with receiver 13 for illustration purposes only, since receiver 13 is fixedly mounted to the flanges 12 of base frame 1.

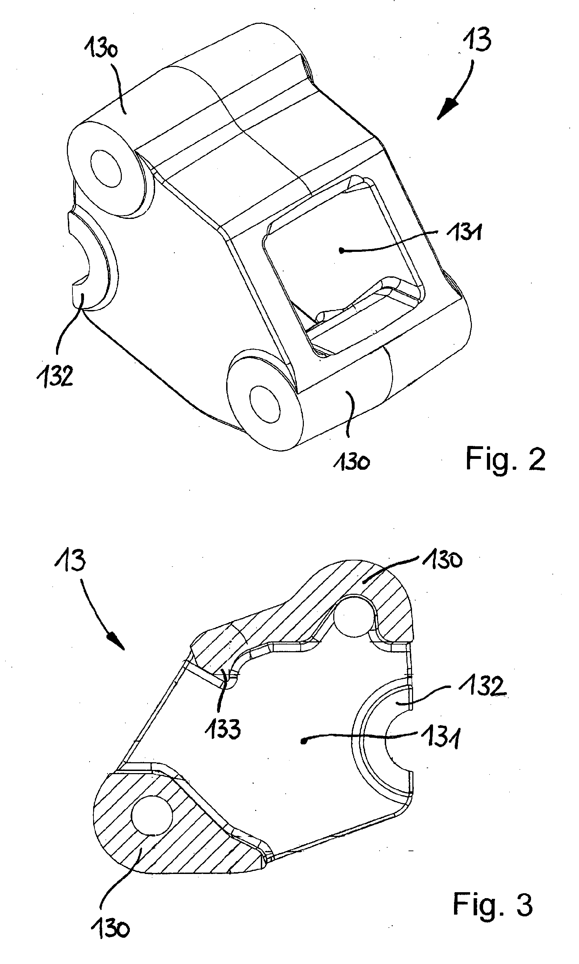

Receiver 13 is shown in enlarged views in Fig. 2 and in Fig. 3. It comprises two fixation portions 130 for accommodating a respective fixation screw (not shown) with the aid of which and with the aid of corresponding nuts receiver 13 can be fixedly mounted to flanges 12 of base frame 1. In addition, receiver 13 comprises a hollow inner space 131 into which the attachment portion of detachable interface 2 can be introduced for attachemnt of detachable interface 2 to receiver 13 and thus to base frame 1, which itself is mounted to the chassis of the vehicle, e.g. the car. Receiver 13 further comprises two semi-cylindrical bearings 132 for accommodating a transversely extending pin of the attachment portion of detachable interface 2.

While rack 3 is generally pre-mounted to detachable interface 2 prior to attaching detachable interface 2 to receiver 13 of base frame 1, for the sake of simplicity the following drawings and description only show and explain the way how the attachment and detachment of detachable interface 2 to and from receiver 13 is performed. Pre-mounted rack 3 is then attached to base frame 1 together with detachable interface 2 to which it is mounted.

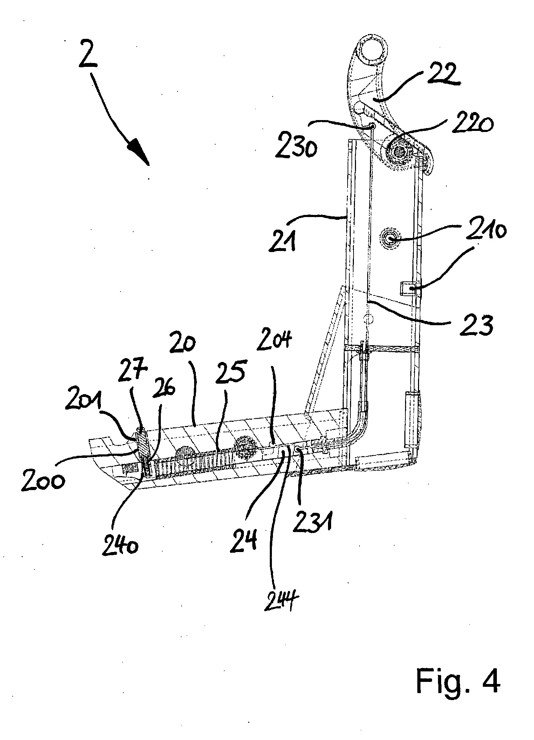

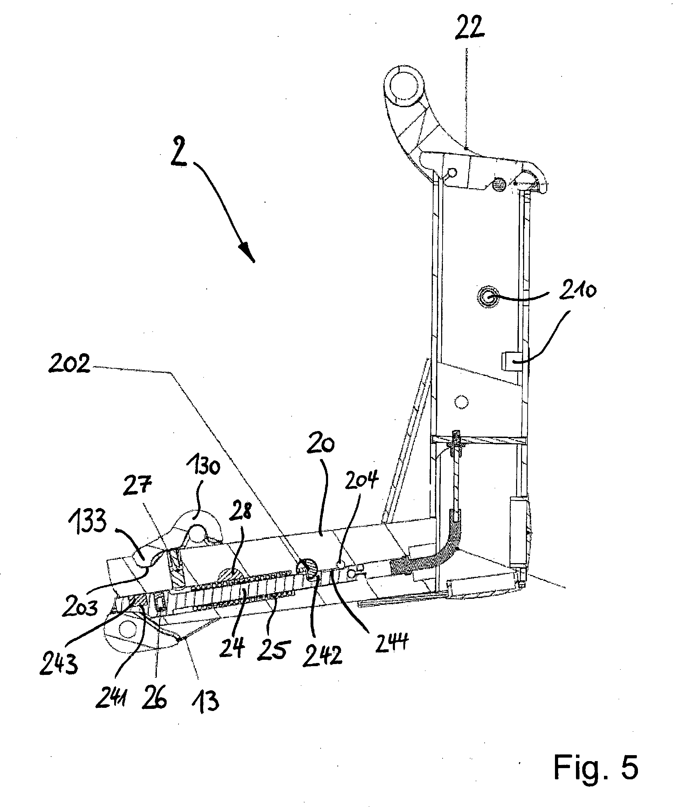

Fig. 4 shows detachable interface 2 in a state in which it is detached from receiver 13 and in which it can be attached to receiver 13, while Fig. 5 shows the detachable interface 2 in a state in which it is securly attached to receiver 13. Detachable interface 2 comprises an essentially horizontally arranged attachment portion 20. The term "essentially horizontally" is meant to comprise both an exactly horizontally arranged attachment portion 20 as well as an attachment portion 20 which includes an angle of up to 10° with an exactly horizontally arranged portion. Preferably, the attachment portion comprises an angle of 10° with the exact horizontal direction. This angle adds to the 90° angle relative to the vertical. Detachable interface 2 further comprises a vertically arranged mounting portion 21 to which rack 3 is mounted at mounting points 210.

Detachable interface 2 further comprises a pivotally arranged lever 22 which is arranged at the upper end of vertically arranged mounting portion 21. Lever 22 can be actuated by the user in a manner to be pivoted from a rest position (shown in Fig. 5) to an actuated position (shown in Fig. 4). Lever 22 is connected by means of a Bowden-cable 23 to a pinion 24 which is slidably arranged in attachment portion 21 of detachable interface 2. For this purpose, one end 230 of Bowden-cable 23 is mounted to lever 22 and the other end 231 of Bowden cable 23 is mounted to pinion 24. Between its two ends Bowden-cable 23 is guided through guiding sleeves to ensure safe movement of Bowden-cable 23 upon actuation of lever 22. A torsion spring (not visible) is mounted to lever 22, so that once the user has pivoted lever 22 to the actuated position and once pinion 24 has been locked in the disengagement position (see explanation below), lever 22 is automatically returned to the rest position shown in Fig. 5. This avoids rattling of lever 22 during use and also prevents water from entering mounting portion 21.

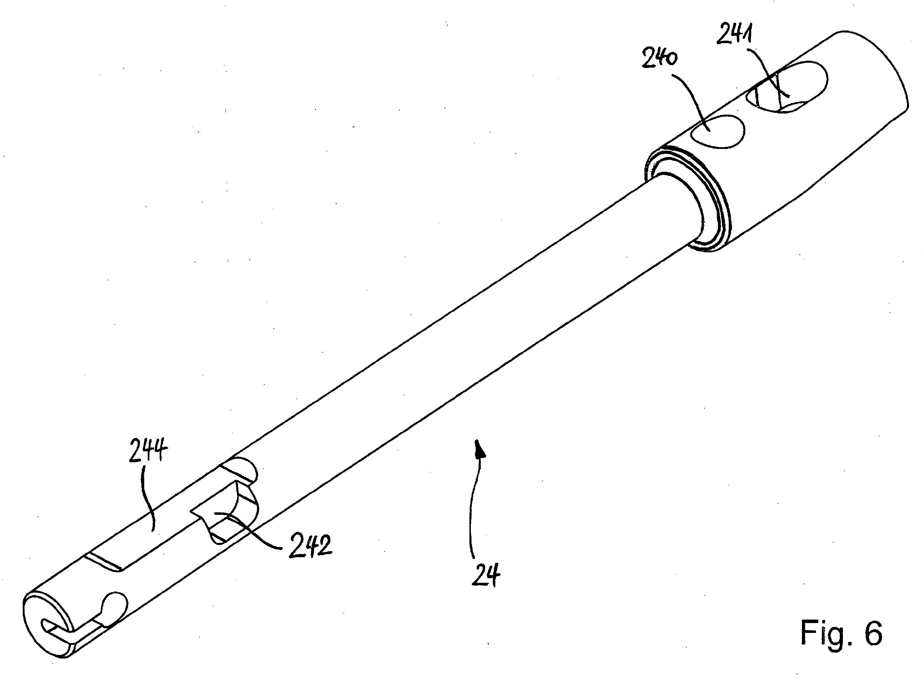

When lever 22 has been pivoted to the actuated position as shown in Fig. 4, pinion 24 is slidably retracted within attachment portion 20 of detachable interface 2 against the force of a return spring 25 which tends to bias pinion 24 back to the engagement position (which will be explained further below). However, upon actuating lever 22 by pivoting it to the actuated position, pinion 24 is slidably retracted to a position in which a spring-biased bush 26 arranged in a recess 240 of pinion 24 is pushed against an outwardly movable pin 27 arranged in a sleeve 201 arranged in a bore 200 of attachment portion 20. Thus, although return spring 25 exerts a bias force which wants to move pinion 24 back to its engagement position, this is impossible due to the spring biased-bush 26 extending into bore 200 thus preventing pinion 24 from being biased back to the engagement position. Accordingly, the user is not required to hold lever 22 in the actuated position but rather spring-biased bush 26 locks pinion 24 in the disengagement position. Once pinion 24 has been locked in the disengagement position, lever 22 is returned to its rest position with the aid of the above-mentioned torsion spring 220. To prevent rotation of pinion 24 during movement, a flattened groove 244 is provided on pinion 24 (see also Fig. 6) which is engaged by a transverse pin 204.

To explain how detachable interface 2 shown in the state of Fig. 4 is attached to receiver 13 of base frame 1, let us assume that attachment portion 20 of detachable interface 2 is moved into hollow inner space 131 of receiver 13 with spring-biased bush 26 extending into bore 200 and pushing pin 27 outwardly. Upon introduction of attachment portion 20 into hollow inner space 131 of receiver 13 pin 27 projecting outwardly comes into contact with the inner wall of receiver 13. Further introduction of attachment portion 20 into hollow inner space 131 of receiver 13 causes pin 27 to be pushed inwardly thus urging spring-biased bush 26 out of bore 200 and releasing locked pinion 24, which is then biased back to the engagement position shown in Fig. 5 by return spring 25. In the engagement position, a downwardly projecting transverse edge 133 of receiver 13 engages into a transversly arranged groove 203 of attachment portion 20 of detachable interface 2, transversely arranged pin 28 is abuttingly accommodated by semi-cylindrical bearings 132 of receiver 13 (see also Fig. 1), and pinion 24 engages a lower portion of receiver 13. Detachable interface 2 and rack 3 pre-mounted thereto are thus securely attached to receiver 13 of base frame 1. While smaller movements of detachable interface 2 in the up and down direction are still possible (e.g. to allow such movement when the vehicle drives over a bump), other degrees of freedom of movement of detachable interface 2 are blocked. Thus, no rattling of the rear carrier may occur when it is securely attached.

From Fig. 5 two further advantageous features can be recognized, which also become evident when glancing at the enlarged view of pinion 24 shown in Fig. 6. The first one of these features relates to a resilient insert 243 which is arranged in a recess 241 of pinion 24 and reduces the contact pressure between pinion 24 and attachment portion 20. The second one of these features relates to a cam 202 of a cam mechanism which serves as an anti-theft means. Cam 202 can be rotated from a position shown in Fig. 5, in which it extends into a further recess 242 of pinion 24 and blocks any movement of pinion 24, to a position where it is rotated by 90° relative to the position shown in Fig. 5, so that it allows pinion 24 to be retracted into the disengagement position and biased back to the engagement position. Rotation of cam 202 can be performed, by way of example, with the aid of a key. Accordingly, the user can lock detachable interface 2 with a key when it is attached to receiver 13 of base frame 1, so that it is not possible for non-authorized persons to remove detachable interface 2 and rack 3 pre-mounted thereto from base frame 1. Also, when detachable interface 2 and rack 3 pre-mounted thereto have been detached from base frame 1, cam 202 of cam mechanism can be rotated to its locked position in which any movement of pinion 24 is prevented. Thus, even if a non-authorized person takes away detachable interface 2 with rack 3 pre-mounted thereto such person cannot use detachable interface 2 as long as this person does not have the key for unlocking the cam mechanism to allow pinion 24 to be moved.

Assuming that detachable interface 2 is in the state shown in Fig. 5, in order to detach detachable interface 2 and carrier 3 mounted thereto from receiver 13 of base frame 1, the user first has to use the key to rotate cam 202 by 90°. Thereafter, the user has to actuate lever 22 by pivoting it to the actuated position thus causing pinion 24 to be retracted until spring biased-bush 26 extends into bore 200 and locks pinion 24 in the disengagement position. After that, attachment portion 24 can be moved downwardly a little bit to allow groove 203 of attachment portion 20 of detachable interface 2 to be disengaged from downwardly projecting edge 133 of receiver 13. Thereafter, attachment portion 20 can be moved rearwards essentially horizontally to move attachment portion 20 of detachable interface 2 out of inner space 131 of receiver 13. Detachment of detachable interface 2 from receiver 13 is now complete.

Having described an advantageous embodiment of the rear carrier according to the invention, the person skilled in the art recognizes that various modifications and changes can be made to the embodiment described without departing from the general teaching of the invention. Accordingly, the described embodiment is not intended to limit the scope of the invention, which is defined by the appended claims.

## Claims

1. Rear carrier for non-towing vehicles, in particular for bicycles or the like, comprising
- a base frame (1) to be mounted to the chassis of the vehicle, the base frame being provided with a receiver (13)
- a detachable interface (2) which is capable of being detachably mounted to the receiver (13) of the base frame (1), the detachable interface (2) comprising engagement means (24) for engaging the receiver (13) of the base frame (1), said engagement means being movable between an engagement position in which they lockingly engage the receiver (13) to fixedly attach the detachable interface (2) to the receiver, and a disengagement position in which they allow detachment or attachment of the detachable interface (2) to the receiver (13),
the detachable interface (2) further comprises actuation means (22) for moving the engagement means (24) from the engagement position to the disengagement position, said actuation means (22) being arranged spaced apart from the engagement means (24) and being mechanically coupled to the engagement means such that for detachment of the detachable interface (2) from or for attachment of the detachable interface (2) to the receiver (13) a user can actuate the actuation means (22) from a position behind the vehicle,
the detachable interface (2) further comprises an essentially horizontally arranged attachment portion (20) to engage the receiver (13) and
- a rack (3) to be fixedly mounted to the detachable interface (2) for carrying the bicycles or the like,
**characterized in that** the detachable interface comprises a vertically arranged mounting portion (21) to which the rack (3) is to be mounted, and that the actuation means comprise an actuation member (22) arranged at the upper end of the vertically arranged mounting portion (21) of the detachable interface (2).

2. Rear carrier according to claim 1, wherein the actuation member at the upper end of the mounting portion of the detachable interface comprises a pivotally arranged lever (22) capable of being pivoted between a rest position and an actuated position, and wherein the engagement means for engaging the receiver (13) of the base frame (1) comprise a slidably arranged pinion (24), which is connected to the lever (22) through a cable (23) so as to allow the pinion (24) to be slidably retracted from the engagement position to the disengagement position upon pivoting the lever (22) from the rest position to the actuated position.

3. Rear carrier according to claim 2, wherein the slidably arranged pinion (24) is provided with locking means (26) for locking the pinion (24) in the disengagement position.

4. Rear carrier according to claim 3, further comprising release means (27) for releasing the pinion (24) from the disengagement position upon introduction of the attachment portion (20) of the detachable interface (2) into the receiver of the base frame, and bias means (25) to automatically return the released pinion (24) to the engagement position.

5. Rear carrier according to any one of claims 2 to 4, further comprising anti-theft means (202,242) for blocking the pinion (24) in its engagement position when the anti-theft means are locked.

6. Rear carrier according to any one of the preceding claims, wherein at least one of the base frame (1), the detachable interface (2) and the rack (3) are made from a light-weight material, e.g. aluminium.

## Patentansprüche

1. Rückwärtiger Träger für Fahrzeuge ohne Zugvorrichtung, insbesondere für Fahrräder oder dergleichen, mit
- einem an dem Chassis des Fahrzeugs zu befestigenden Grundrahmen (1), wobei der Grundrahmen mit einem Aufnehmer (13) versehen ist,
- einem abnehmbaren Zwischenstück (2), das abnehmbar an dem Aufnehmer (13) des Grundrahmens (1) befestigt werden kann, wobei das abnehmbare Zwischenstück (2) Erfassungsmittel (24) zum Erfassen des Aufnehmers (13) des Grundrahmens (1) beinhaltet, wobei die genannten Erfassungsmittel zwischen einer Eingriffsstellung, in der sie den Aufnehmer (13) arretierend erfassen, um das abnehmbare Zwischenstück (2) fest an dem Aufnehmer anzubringen, und einer Ausrückstellung, in der sie das Abnehmen oder Anbringen des abnehmbaren Zwischenstücks (2) an dem Aufnehmer (13) erlauben, bewegbar sind,
wobei das abnehmbare Zwischenstück (2) weiterhin Betätigungsmittel (22) beinhaltet, um die Erfassungsmittel (24) von der Eingriffsstellung in die Ausrückstellung zu bewegen, wobei die genannten Betätigungsmittel (22) im Abstand von den Erfassungsmitteln (24) angeordnet und mechanisch mit den Erfassungsmitteln verbunden sind, so dass ein Benutzer zum Abnehmen des abnehmbaren Zwischenstücks (2) von dem Aufnehmer (13), oder zum Anbringen des abnehmbaren Zwischenstücks (2) an dem Aufnehmer (13), die Betätigungsmittel (22) aus einer Stellung hinter dem Fahrzeug betätigen kann,
wobei das abnehmbare Zwischenstück (2) weiterhin ein im Wesentlichen horizontal angeordnetes Befestigungsteil (20) beinhaltet, um den Aufnehmer (13) zu erfassen, und
- einem Gestell (3), das an dem abnehmbaren Zwischenstück (2) fest anzubringen ist, um Fahrräder oder dergleichen zu tragen, **dadurch gekennzeichnet, dass** das abnehmbare Zwischenstück ein vertikal angeordnetes Montageteil (21), an dem das Gestell (3) anzubringen ist, beinhaltet, und dass die Betätigungsmittel ein Betätigungsglied (22) beinhalten, das an dem oberen Ende des vertikal angeordneten Montageteils (21) des abnehmbaren Zwischenstücks (2) angeordnet ist.

2. Rückwärtiger Träger nach Anspruch 1, bei dem das Betätigungsglied an dem oberen Ende des Montageteils des abnehmbaren Zwischenstücks einen drehbar angeordneten Hebel (22) beinhaltet, der zwischen einer Ruhestellung und einer Betätigungsstellung geschwenkt werden kann, und bei dem die Erfassungsmittel zum Erfassen des Aufnehmers (13) des Grundrahmens (1) einen verschiebbar angeordneten Triebling (24) beinhalten, welcher mit dem Hebel (22) über ein Kabel (23) verbunden ist, um es dem Triebling (24) zu ermöglichen, aus der Eingriffsstellung verschiebbar in die Ausrückstellung zurückgezogen zu werden, wenn der Hebel (22) aus der Ruhestellung in die Betätigungsstellung geschwenkt wird.

3. Rückwärtiger Träger nach Anspruch 2, bei dem der verschiebbar angeordnete Triebling (24) mit Verschlussmitteln (26) versehen ist, um den Triebling (24) in der Ausrückstellung zu sichern.

4. Rückwärtiger Träger nach Anspruch 3, welcher weiterhin Entriegelungsmittel (27) zum Lösen des Trieblings (24) aus der Ausrückstellung bei Einführung des Befestigungsteils (20) des abnehmbaren Zwischenstücks (2) in den Aufnehmer der Grundrahmens beinhaltet, und Spannmittel (25), um den gelösten Triebling (24) automatisch in die Eingriffsstellung zurückzuführen.

5. Rückwärtiger Träger nach einem beliebigen der Ansprüche 2 bis 4, der weiterhin Antidiebstahlmittel (202, 242) beinhaltet, um der Triebling (24) in seiner Eingriffsstellung zu arretieren, wenn die Antidiebstahlmittel verschlossen sind.

6. Rückwärtiger Träger nach einem beliebigen der vorhergehenden Ansprüche, bei dem zumindest der Grundrahmen (1), das abnehmbare Zwischenstück (2) oder das Gestell (3) aus leichtem Material, z.B. Aluminium, hergestellt sind.

## Revendications

1. Support arrière pour véhicules non-remorqueurs, en particulier pour bicyclettes ou similaires, comprenant :
un cadre de base (1) destiné à être monté sur le châssis du véhicule, le cadre de base étant prévu avec un récepteur (13),
une interface détachable (2) qui peut être montée de manière détachable sur le récepteur (13) du cadre de base (1), l'interface détachable (2) comprenant des moyens de mise en prise (24) pour mettre en prise le récepteur (13) du cadre de base (1), lesdits moyens de mise en prise pouvant passer d'une position de mise en prise dans laquelle ils mettent en prise de manière verrouillable le récepteur (13) pour fixer l'interface détachable (2) sur le récepteur, à une position de désengagement dans laquelle ils permettent le détachement ou la fixation de l'interface détachable (2) sur le récepteur (13),
l'interface détachable (2) comprend en outre des moyens d'actionnement (22) pour faire passer les moyens de mise en prise (24) de la position de mise en prise à la position de désengagement, lesdits moyens d'actionnement (22) étant agencés à distance des moyens de mise en prise (24) et étant couplés mécaniquement aux moyens de mise en prise de sorte que pour le détachement de l'interface détachable (2) ou la fixation de l'interface détachable (2) sur le récepteur (13), un utilisateur peut actionner les moyens d'actionnement (22) à partir d'une position derrière le véhicule,
l'interface détachable (2) comprend en outre une partie de fixation (20) agencée de manière essentiellement horizontale pour mettre en prise le récepteur (13), et
un bâti (3) destiné à être monté de manière fixe sur l'interface détachable (2) pour porter les bicyclettes ou similaires,
**caractérisé en ce que** l'interface détachable comprend une partie de montage (21) agencée verticalement sur laquelle le bâti (3) doit être monté, et **en ce que** les moyens d'actionnement comprennent un élément d'actionnement (22) agencé au niveau de l'extrémité supérieure de la partie de montage (21) agencée verticalement de l'interface détachable (2).

2. Support arrière selon la revendication 1, dans lequel l'élément d'actionnement au niveau de l'extrémité supérieure de la partie de montage de l'interface détachable comprend un levier (22) agencé de manière pivotante pouvant être pivoté entre une position de repos et une position actionnée, et dans lequel les moyens de mise en prise pour mettre en prise le récepteur (13) du cadre de base (1) comprennent un pignon (24) agencé de manière coulissante, qui est raccordé au levier (22) par le biais d'un câble (23) afin de permettre au pignon (24) d'être rétracté de manière coulissante de la position de mise en prise à la position de désengagement suite au pivotement du levier (22), de la position de repos à la position actionnée.

3. Support arrière selon la revendication 2, dans lequel le pignon (24) agencé de manière coulissante est prévu avec des moyens de verrouillage (26) pour verrouiller le pignon (24) dans la position de désengagement.

4. Support arrière selon la revendication 3, comprenant en outre des moyens de libération (27) pour libérer le pignon (24) de la position de désengagement suite à l'introduction de la partie de fixation (20) de l'interface détachable (2) dans le récepteur du cadre de base, et des moyens de sollicitation (25) pour ramener automatiquement le pignon (24) libéré à la position de mise en prise.

5. Support arrière selon l'une quelconque des revendications 2 à 4, comprenant en outre des moyens antivol (202, 242) pour bloquer le pignon (24) dans sa position de mise en prise lorsque les moyens antivol sont verrouillés.

6. Support arrière selon l'une quelconque des revendications précédentes, dans lequel, au moins l'un parmi le cadre de base (1), l'interface détachable (2) et le bâti (3) est réalisé à partir d'un matériau léger, par exemple l'aluminium.
